# EUROPÄISCHE PATENTSCHRIFT

(11) **EP 0 396 881 B1**
(45) Veröffentlichungstag und Bekanntmachung des Hinweises auf die Patenterteilung: **23.06.1993**
(21) Anmeldenummer: 90105089.8
(22) Anmeldetag: 17.03.1990
(51) Int. Cl.: A01K 1/015, E04C 2/42

(54) **Bodenbelag, insbesondere für Standflächen des Viehs in Ställen**
Floor covering especially for surfaces supporting animals in stables
Revêtement de sol, en particulier pour surfaces portant des animaux dand des éetables

(30) Priorität: 10.05.1989 DE 3915238; 19.08.1989 DE 3927462
(43) Veröffentlichungstag der Anmeldung: 14.11.1990
(73) Patentinhaber: Michel, Heinrich, D-47574 Goch (DE)
(72) Erfinder: Michel, Heinrich, D-47574 Goch (DE)
(74) Vertreter: Herrmann-Trentepohl, Werner, Dipl.-Ing.

(56) Entgegenhaltungen:
- DE-A- 3 012 855
- DE-A- 3 402 046
- FR-A- 2 513 071
- GB-A- 2 136 472
- US-A- 4 182 271

## Beschreibung

Die Erfindung betrifft einen Bodenbelag gemäß dem Oberbegriffes des Anspruchs 1. Dieser Bodenbelag läßt sich überall dort verlegen, wo Feuchtigkeit und Schmutz auftreten und diese Verunreinigungen von der Bodenfläche nach unten abgeführt werden müssen. Der erfindungsgemäße Bodenbelag verlangt jedoch eine Abstimmung der Bodenbelastung auf die Festigkeit des Formkörpers, aus dem der Belag besteht. Das bevorzugte Anwendungsgebiet der Erfindung sind daher Standflächen für das in Ställen gehaltene Vieh, insbesondere in Schweineställe. Hierbei läuft der flüssige Anteil der Gülle durch die Schlitze des Belages nach unten ab, während die festen Bestandteile mit den Hufen der Tiere durch den Bodenbelag nach unten gedrückt werden.

Im allgemeinen bestehen die Formkörper des Bodenbelages gemäß der Erfindung aus Kunststoff, beispielsweise aus Polypropylen und werden aus diesem Werkstoff im Spritzgußverfahren hergestellt. Sie werden zu einem Rostboden verlegt. Flachstahlunterzüge übernehmen die Haupttragefunktion. Die Formkörper haben vorzugsweise einen quadratischen Grundriß, können aber auch rechteckig sein. Sie sind an ihren Seitenkanten mit den Profilen des Rostes formschlüssig. Sie lassen sich derart in zwei Richtungen aneinanderpassen, daß sie eine ununterbrochene Bodenfläche ergeben. Eine gegebene Stallfläche kann deshalb lückenlos mit dem erfindungsgemäßen Bodenbelag belegt werden.

Im einzelnen wird dies durch die Verzahnung erreicht, die einen horizontalen Formschluß ergibt und einen durchgehenden Spalt zwischen benachbarten Formkörpern ausschließt. An den betreffenden Formkörperseiten wird so die gegenseitige Verschiebung der Formkörper verhindert. Die beiden anderen Kanten jedes Formkörpers sind mit angeformten Zapfen und Konsolen versehen, welche die Zapfen senkrecht nach oben versperren; dadurch ist der Bodenbelag gegen Abheben von dem Rost gesichert und durch Auflegen auf Flachstahlprofile des Rostes in der anderen Richtung festgelegt.

Die Formkörper gemäß der Erfindung weisen ihrerseits ein System paralleler Profile und ineinander übergehender Profilflansche auf, um die statischen und dynamischen Belastungen des Bodens aufzunehmen und eine von den Schlitzen unterbrochene Bodenfläche auszubilden. Die Profile werden vorzugsweise als Träger gleicher Festigkeit ausgebildet, um Durchbiegungen des Belages zu vermeiden.

Auf der Trittseite sind sich kreuzende Längs- und Querrippen vorgesehen, durch deren Mehrzahl eine Vielzahl von Feldern auf der Trittseite gebildet werden. Diese Rippen bilden einen Gleitschutz, weil sie in zwei zueinander senkrechten Richtungen die in der Ebene der Trittfläche Hindernisse darstellen, wenn die in den Feldern stehenden Hufe der Tiere abrutschen. Deswegen stehen die Tiere sicher und üben mit ihren Hufen ihre beabsichtigte Wirkung auf die festen Verunreinigungen der Trittfläche aus. Die in den Feldern angebrachten Schlitze unterbrechen die Rippen nicht, so daß diese auch zur Versteifung des Formkörpers in Richtung seiner Hauptbelastungen beitragen.

Es ist bekannt, bei einem Bodenbelag der geschilderten Art die Trittflächen der Felder in einer gemeinsamen Ebene anzuordnen, die den Formkörper horizontal durchsetzt und unterhalb der in einer gemeinsamen Ebene angeordneten Oberseiten der Rippen angeordnet ist (GB-PS 21 36 472). In der Praxis zeigt sich jedoch, daß beim Aufstehen, vor allem der Mutterschweine, die Rippen wie Stolperelemente wirken. Beim Stehen und Laufen der Tiere können die Rippen Druckstellen unter den Klauen hervorrufen. Beim Liegen sind die Rippen tierunfreundlich. Ebenso zeigt sich in der Praxis, daß die Hufe der Tiere die Rippen abtreten, so daß nach längerer oder kürzerer Zeit je nach Belastung des Bodenbelages eine glatte Trittfläche entsteht, auf der die Tiere abrutschen. Man muß in solchen Fällen den Bodenbelag großflächig austauschen, um Unfälle zu vermeiden. Das ist kostspielig, weil die Versorgung und die Entsorgung bei den aus Kunststoff bestehenden Formkörpern mit beträchtlichem Aufwand verbunden sind.

Der Erfindung liegt die Aufgabe zugrunde, den Bodenbelag der geschilderten allgemeinen Ausbildung so auszuführen, daß der Bodenbelag längere Nutzungsdauern erreicht, wenn er den verschleißend wirkenden Belastungen ausgesetzt ist.

Diese Aufgabe löst die Erfindung mit den Merkmalen des Anspruches 1. Weitere Merkmale der Erfindung sind Gegenstand der Unteransprüche.

Gemäß der Erfindung werden durch die Bildung von Taschen aus dem Boden der Felder die Trittflächen zwischen den Rippen gegenüber den Rändern der Felder tiefer gelegt und durch die Taschenform zu den Flanken der Rippen aufsteigende Flächen hergestellt. Dadurch gleiten die Hufe der Tiere zur jeweiligen Feldesmitte hin, was dazu führt, daß sich die Taschen durch den Verschleiß auf ihren Rändern ständig vertiefen und dieser Verschleiß stärker als der auf den Rippen auftretende Verschleiß ist. Deswegen bleibt der Höhenunterschied der Trittfläche in den Feldern gegenüber der auf den Rippen im wesentlichen während der Nutzungszeit des Bodenbelages erhalten. Damit stehen die Tiere sicher, bis die verschleißbare Dicke der Formkörper erschöpft ist. Vorzeitige Erneuerungen der Formkörper infolge zunehmender Glätte der Trittfläche treten bei der Erfindung nicht mehr auf.

Ein anderer Vorteil der Erfindung, der sich aus der Taschenform der Felder ergibt beruht ebenfalls auf der reibenden Beanspruchung der Taschen durch die Hufe der Tiere. Sie führt im Zusammenhang mit den Schlitzen dazu, daß die festen Bestandteile der Gülle in die Schlitze transportiert und durch diese passiert werden. Das ergibt den Vorteil, daß die Trittflächen schneller von den festen Bestandteilen der Gülle gesäubert werden.

Ferner hat die Erfindung den Vorteil, daß den Tieren, vor allem Mutterschweinen, in allen Körperstellungen Anpassung an die natürlichen Bewegungsabläufe geboten wird und es dem Wohlergehen, vor allem der Muttersau und ihren Ferkeln, fördert.

Dabei wird die Erfindung so verwirklicht, daß die erwünschte reibende Beanspruchung der Taschenränder die Tiere möglichst wenig belastet. Das wird dadurch erreicht, daß die Oberseiten der Felder in zueinander Senkrechten Richtungen von den Längs- und Querrippen nach unten Kontinuierlich gekrümmt sind.

Wenn man dagegen die Merkmale des Anspruches 3 verwirklicht, werden infolge der gleichmäßigen Neigung der Taschenränder die im Einzelfall auftretenden Gleitgeschwindigkeiten zur Taschenmitte vergrößert, wodurch sich der Verschleiß der Trittfläche gegenüber den Rippen verstärken läßt.

Die sich durch die Erfindung vertiefenden Felder können dazu führen, daß sich die Höhe der Rippen vergrößert. Wenn die Hufe der Tiere auf solchen Rippen stehen, kann das zu einem unsicheren Stand führen. Mit den Merkmalen des Anspruches 4 läßt sich dem entgegenwirken, weil die Unterbrechungen der Rippen auch die Rutschfläche auf den Rippen verkleinert.

Gemäß der Erfindung wird außerdem die Anordnung der Rippen und der Felder so gewählt, daß sich über die gesamte Trittfläche des Belages eine einheitliche Rippenoberfläche ergibt, um zu verhindern, daß bevorzugte Bereiche der Formkörper stehen bleiben und dadurch einen unsicheren Stand ergeben. Normalerweise verdoppeln sich nämlich die Längsrippen an den einanderzugekehrten Kanten der Formkörper im Bodenbelag. Dieser Nachteil läßt sich mit den Merkmal des Anspruches 5 vermeiden, weil hierdurch an jedem Längsrand nur eine Längsrippe stehen bleibt.

Die Erfindung wird im folgenden anhand eines Ausführungsbeispieles näher erläutert. Es zeigen
- Fig. 1: einen fertig montierten Bodenbelag in abgebrochener Darstellung und in Draufsicht auf die Formkörper,
- Fig. 2: einen Schnitt längs der Linie II-II der Fig. 1,
- Fig. 3: einen Querschnitt längs der Linie III-III der Fig. 1 und
- Fig. 4: eine vergrößerte Darstellung im Querschnitt längs der Linie IV-IV der Fig. 1.

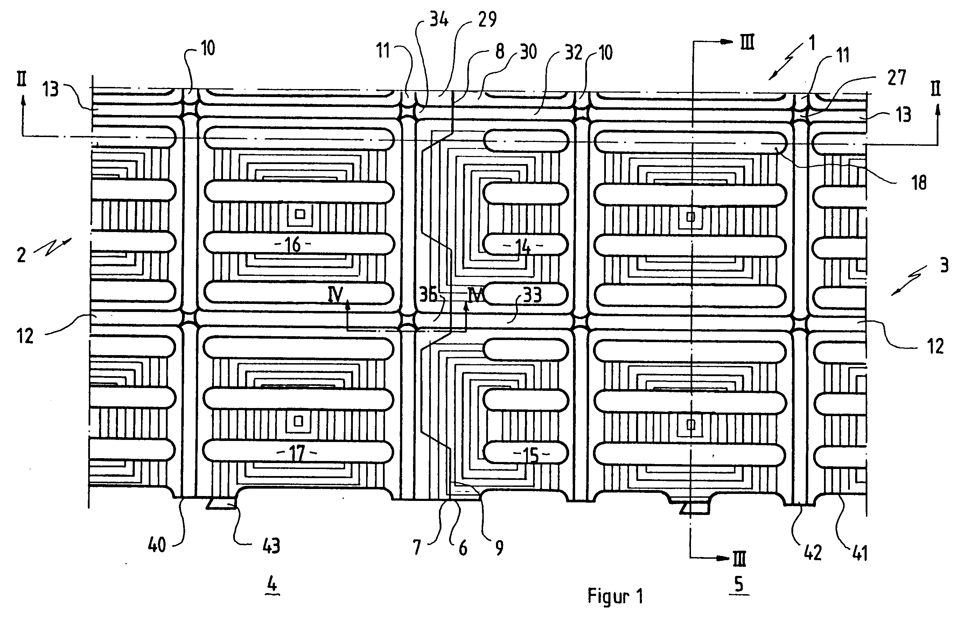

Der in Fig. 1 allgemein mit (1) bezeichnete Bodenbelag ist insbesondere für die Standflächen des Viehs in Ställen vorgesehen. Er ist aus plattenförmigen Formkörpern (2) bis (5) identischer Ausbildung zusammengesetzt. In der Zeichnung sind die Einzelheiten der Formkörper (4) und (5) nicht wiedergegeben. Jeder Formkörper hat an einem Paar gegenüberliegender Ränder (6, 7) und eine Verzahnung mit trapezförmigen Zahnlücken (8) und trapezförmigen Zähnen (9), die derart gegeneinander versetzt sind, daß das andere Paar von Formkörperrändern (40, 41) mit den entsprechenden Rändern der benachbarten Formkörper ausgefluchtet ist. Diese Ränder sind mit ineinandergreifenden Zapfen (42) und Konsolen (43) versehen, die das Anheben benachbarter Formkörper verhindern. Unter der Trittfläche des Belages durchsetzen die Zahnflanken Nuten (44), mit denen die Formkörper auf hochkant stehenden Flachstählen aufgesetzt werden können (die in Fig. 1 nicht dargestellt sind), so daß unter den Formkörpern ein Hohlraum verbleibt.

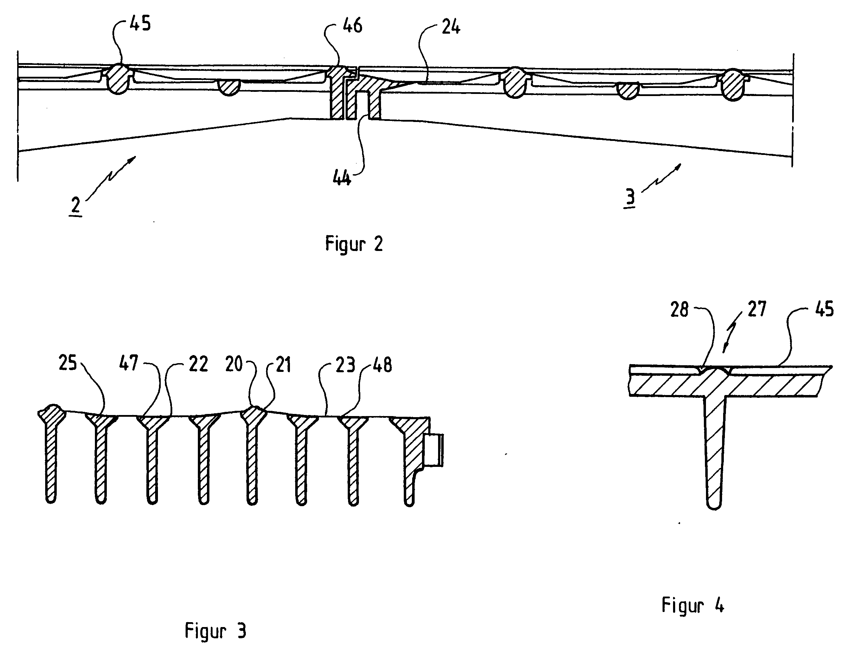

Jeder Formkörper weist auf seiner Trittseite eine Mehrzahl von ausgeformten und sich kreuzenden Längsrippen (10, 11), sowie Querrippen (12, 13) auf. Die Rippen liegen mit ihren leicht gewölbten Oberseiten (45, 46) in einer horizontalen Ebene der Formkörper (Fig. 4). Sie begrenzen eine Vielzahl von Feldern (14 bis 17), in denen parallele Schlitze (18) angeordnet sind.

Die Oberseiten (47, 48) der Felder (14 bis 17) sind gegenüber den Flanken (20, 21) der Rippen (10 bis 13) vertieft. Diese Vertiefung verläuft in Quer- und Längsrichtung der Rippen (10 bis 13) und formt dadurch Taschen (22, 23), deren tiefste Stelle gemäß dem dargestellten Ausführungsbeispiel in der geometrischen Mittelfläche (24) jedes Feldes (14 bis 17) liegt.

Die Oberflächen (47, 48) der Felder sind gemäß dem dargestellten Ausführungsbeispiel in zueinander senkrechten Richtungen bis zur jeweiligen Mittelfläche geradlinig nach unten geführt.

Die Einzelheiten ergeben sich aus der Darstellung der Fig. 3. Danach werden die Oberflächen (47, 48) infolge ihrer Unterbrechung durch die Schlitze (18) von den Oberseiten der Flansche (25) jeweils eines T-Profiles gebildet und liegen auf einem gemeinsamen Radius, sie sind konkav gekrümmt. Die verschleißbare Stegdicke der Flansche (25) bestimmt die Lebensdauer der Formkörper

Aus der Darstellung der Fig. 4 im Zusammenhang mit der Darstellung der Fig. 1 der Ecken (27) der Felder (2 bis 5) ergibt sich, daß die Rippenwölbungen dort unterbrochen sind. Dadurch entsteht eine kreuzförmige Vertiefung (28), welche die Oberseiten (45) der Rippen unterbricht.

Abweichend von dem dargestellten Ausführungsbeispiel kann der Taschenboden eben ausgebildet sein und aufsteigende Taschenränder aufweisen, die wie aus Fig. 3 ersichtlich an den konvergierenden Flanken (20, 21) der Rippen enden.

Aus der Darstellung der Fig. 1 ergibt sich ferner, daß die Verzahnungen (8, 9) innerhalb der bezeichneten Felder (14 bis 17) angeordnet sind und die Schlitze (18) jedes Feldes an einer randparallelen Zahnleiste (29, 30) enden, aus der randseitig Zahnlücken (8) ausgespart sind, wobei die Zahnleiste (30) an der betreffenden Formkörperseite die Längsrippe (10) aufweist und Ansätze (32, 33) von Querrippen trägt, die sich mit den Querrippenansätzen (34, 35) der anderen Zahnleiste (29) zu den vollen Querrippen (12, 13) der Felder (2 bis 5) ergänzen. Auf diese Weise wird jede Verdoppelung der Längsrippen vermieden.

Im Gebrauch steht das Vieh normalerweise mit seinen Hufen in den Feldern (2) bis (5). Infolge der beschriebenen Krümmungen (47, 48) ergibt sich eine Tendenz der Hufe in die Feldermitte (24) zu gleiten. Dadurch wird auf die Trittseite der Taschen (22, 23) eine reibende Beanspruchung aufgebracht, welche zu einem schnelleren Verschleiß in den Taschen im Vergleich zum Verschleiß der Rippenoberflächen (44, 45) führt. Im Ergebnis bleiben deswegen die Längs- und Querrippen erhalten. Durch die reibende Beanspruchung werden außerdem feste Bestandteile des abgesetzten Kotes bzw. der Gülle durch die Schlitze (18) nach unten gerieben und durch die Formkörper in den darunterliegenden Hohlraum passiert

Wenn z.B. eine Sau aufsteht, so dienen die 7 Grad (diese können 3 bis 15 Grad sein) schrägen Flächen als Abstützflächen in allen vier Richtungen. Beim Stehen dienen die ebenen Innenflächen einem ebenen und gesunden Stand. Beim Liegen gibt es für die Sau keine Druckstellen, die schrägen Flächen sorgen für einen harmonischen Flächenverlauf. Beim Hinlegen geben die Flächen Ausgleitschutz, die Sau kann sich mit Bedacht langsam legen, so daß die Ferkel nicht totgelegen werden.

## Patentansprüche

1. Bodenlag (1), insbesondere für Standflächen des Viehs in Ställen, bestehend aus plattenförmigen Formkörpern, wobei jeder Formkörper auf seiner Trittseite eine Mehrzahl von ausgeformten, sich kreuzenden Längs-(10,11) und Querrippen (12-13) aufweist, die Felder (14 bis 17) begrenzen, in denen parallele Einzel- oder Doppelschlitze angeordnet sind, wobei die Oberseiten (47,48) der Felder (14 bis 17) gegenüber den Flanken (20,21) der Rippen (10 bis 13) vertieft sind und Taschen (22,23) bilden, dadurch gekennzeichnet, daß die tiefste Stelle der Taschen (22, 23) in der Feldesmitte (24) angeordnet ist und die Oberseiten (47, 48) der Felder (2 bis 5) in zueinander senkrechten Richtungen von den Längs- und Querrippen (10 bis 13) nach unten kontinuierlich gekrümmt sind.

2. Bodenbelag nach Anspruch 1, dadurch gekennzeichnet, daß die plattenförmigen Formkörper an einem Paar gegenüberliegender Ränder (6,7) horizontal verzahnt und an einem anderen Randpaar (40,41) vertikal verzapft sind, um mit ineinandergreifenden Verzahnungen (8,9) und Verzapfungen (42) aneinandergelegt einen horizontal und vertikal versperrten, durchgehenden Belag eines Rostes zu bilden.

3. Bondenbelag nach Anspruch 1 oder 2, dadurch gekennzeichnet, daß die Taschenböden eben sind und die Taschenränder aufsteigende Schrägen bilden.

4. Bodenbelag nach einem oder mehreren der Ansprüche 1 bis 3, dadurch gekennzeichnet, daß die Rippen (10 bis 13) in den Ecken (27) der Felder (2 bis 5) Unterbrechungen (28) aufweisen.

5. Bodenbelag nach einem oder mehreren der Ansprüche 1 bis 4, dadurch gekennzeichnet, daß die Verzahnungen (8, 9) innerhalb der Felder (3, 5) angeordnet sind und die Schlitze (18) jedes Feldes (2, 5) an einer randparallelen Zahnleiste (29, 30) enden, aus der randseitig die Zahnlücken (8) ausgesparrt sind, wobei die Zahnleiste (30) einer Formkörperseite eine durchgehende Rippe (11) und Ansätze (32, 33) von Querrippen (12, 13) aufweist, die sich mit Querrippenansätzen (34, 35) der anderen Zahnleiste (29) zu Querrippen (12, 13) der Felder (2, 5) ergänzen.

## Claims

1. A floor covering (1) especially for surfaces supporting animals in stables, said floor covering consisting of plate-shaped formed bodies, wherein each formed body comprises on its step side a plurality of crossing longitudinal (10,11) and transverse fins (12, 13) moulded thereto, said longitudinal and transverse fins limiting the panels (14 to 17) in which parallel single or double slots are arranged, wherein the top surfaces (47, 48) of the panels (14 to 17) are arranged lower than the flanks (20, 21) of the fins (10 to 13) and form pockets (22, 23),
**characterized in that**
the lowest point of the pockets (22, 23) is in the panel center (24) and that the top surfaces (47, 48) of the panels (2 to 5) are continuously curved downwards from the longitudinal and transverse fins (10 to 13) in directions perpendicular to each other.

2. A floor covering according to claim 1,
**characterized in that**
the plate-shaped formed bodies are horizontally toothed at a pair of opposing edges (6,7) and vertically mortised at another pair of edges (40, 41) in order to form a horizontally and vertically interlocked continuous covering of a grating with interlocking teeth (8,9) and mortise joints (42).

3. A floor covering according to claim 1 or 2,
**characterized in that**
the pocket bottoms are even and that the pocket edges form ascending slopes.

4. A floor covering according to one or several of claims 1 to 3,
**characterized in that**
the fins (10 to 13) are provided with breaks (28) in thr corners (27) of the panels (2 to 5).

5. A floor covering according to one or several of claims 1 to 4,
**characterized in that**
the teeth (8, 9) are arranged within the panels (3, 5) and that the slots (18) of each panel (2, 5) end at a toothed ledge (29, 30) which is parallel to the edge, with the tooth gaps (8) being recessed from said toothed ledge at the side facing the edge, wherein the toothed ledge (30) of a side of the formed body is provided with a continuous fin (11) and shoulders (32, 33) of transverse fins (12, 13) complementing with the transverse fin shoulders (34, 35) of the other toothed ledge (29) to form transverse fins (12, 13) of the panels (2, 5).

## Revendications

1. Revêtement de sol (1), en particulier pour surfaces portant des animaux dans des etables, constitue par des pièces unsinées en forme de plaque, chaque pièce usinée présentant sur son côte de marche une pluralité de nervures formées longitudinales (10,11) et transversales (12,13), qui se croisent et qui délimitent des pans (14 à 17), dans lequels sont disposés des rainures parallèles simples ou doubles, les côtés supérieures (47,48) des pans (14 à 17) étant plus profonds que les flancs (20,21) des nervures (10 à 13) et formant des poches (22,23), **characterisé en ce que** la partie la plus profonde des poches (22,23) est disposé au milieu du pan (24) et que les côtés supérieurs (47,48) des pans (2 à 5) sont courbées de façon continue dans des directions verticales l'une à l'autre, à partir des nervures longitudinales et transversales (10 à 13) vers le bas.

2. Revêtement de sol selon revendication 1, **characterisé en ce que** les pièces usinées en forme de plaque sont endentées horizontalement à une paire de bords (6,7) opposés et pourvues de tenon et mortaise à un autre paire de bords (40,41), pour former, par des assemblages à dents (8,9) s'engrenant et des assemblages à tenon et mortaise (42) s'engrenant, un revêtement continu, bloque horizontalement et verticalement, d'une grille, quand ils sont posés l'une contre l'autre.

3. Revêtement de sol selon revendication 1 ou 2, **characterisé en ce que** les fonds des poches sont plans et que les bords des poches forment des biais ascendants.

4. Revêtement de sol selon l'une ou plusieurs des revendications 1 à 3, **characterisé en ce que** les nervures (10 à 13) présentent des vides (28) aux coins (27) des pans (2 à 5).

5. Revêtement de sol selon l'une ou plusieurs des revendications 1 à 4, **characterisé en ce que** les dentures (8,9) sont disposés en dedans des pans (3,5) et que les rainures (18) de chaque pan (2,5) se terminent à une cremaillère (29,30) parallèle au bord, les entredents (8) étant évidés de la côté bord de la crémaillère, la cremaillère (30) d'un côté de la pièce usinée présentant une nervure (11) continue et des débuts (32,33) de nervures transversales (12,13), qui se complétent avec des débuts de nervures transversales (34,35) de l'autre cremaillère (29) pour former des nervures transversales (12,13) des pans (2,5).
